# FASCICULE DE BREVET EUROPEEN

(11) **EP 1 798 829 B1**
(45) Date de publication et mention de la délivrance du brevet: **29.10.2014**
(21) Numéro de dépôt: 06291937.8
(22) Date de dépôt: 14.12.2006
(51) Int. Cl.: H02G 3/04

(54) **Dalle de support de cables**
Cable support slab
Kabelkanalboden

(30) Priorité: 14.12.2005 FR 0512685
(43) Date de publication de la demande: 20.06.2007
(73) Titulaire: Niedax France, 62400 Bethune (FR)
(72) Inventeur: Dufourg, Bernard, 75006 Paris (FR)
(74) Mandataire: Demulsant, Xavier

(56) Documents cités:
- FR-A- 1 589 099
- FR-A1- 2 647 523
- NL-A- 8 602 096
- US-B1- 6 590 154

## Description

La présente invention est relative aux dalles de support de câbles.

Plus particulièrement, l'invention concerne une dalle de support de câbles, comprenant un profilé en tôle qui s'étend en longueur selon une direction longitudinale et qui présente au moins un fond et deux parois latérales formées d'une seule pièce avec le fond.

Un exemple de dalle de ce type est décrit par exemple dans le document FR-A-2 712 831.

Le document NL-A-8602096 décrit une dalle suivant le préambule de la revendication 1. Cette dalle est pourvue d'un renfort constitué d'une traverse disposée dans la dalle et fixée aux deux parois latérales de celle ci, néanmoins cette traverse n'est pas en contact avec le fond de la dalle.

La présente invention a notamment pour but de renforcer ces dalles notamment pour permettre leur mise en oeuvre sur de plus grandes portées.

A cet effet, selon l'invention, une dalle du genre en question est caractérisée en ce qu'elle comporte en outre des traverses de renfort qui sont fixées rigidement contre la face inférieure du fond et qui s'étendent perpendiculairement à la direction longitudinale, ces traverses de renfort étant solidarisées avec le fond au moins par des fixations voisines des deux parois latérales.

Grâce à ces dispositions, on évite que les parois latérales ne se défléchissent vers l'intérieur ou vers l'extérieur sous des efforts de flexion. De cette façon, on conserve la géométrie et donc les caractéristiques mécaniques d'inertie de la dalle, de sorte que cette dalle résiste mieux aux efforts de flexion et peut donc être utilisée le cas échéant avec des portées relativement grandes entre ses points d'appui, y compris lorsque la dalle présente une largeur élevée. On obtient ainsi une dalle renforcée qui peut être mise en oeuvre le cas échéant sur de longues portées et en grandes largeurs, tout en pouvant assurer une bonne isolation électromagnétique entre l'intérieur et l'extérieur de la dalle (notamment lorsqu'un couvercle métallique recouvre le profilé de tôle).

Dans divers modes de réalisation de l'invention, on peut éventuellement avoir recours en outre à l'une et/ou à l'autre des dispositions suivantes :
- les traverses de renfort sont des profilés à section sensiblement en U comprenant une base au contact du fond et deux ailes s'étendant à l'opposé du fond ;
- les ailes de chaque traverse de renfort présentent des bords inférieurs repliés l'un vers l'autre ;
- les traverses de renfort sont rivetées sous le fond du profilé ;
- les parois latérales présentent un bord roulé supérieur ;
- les traverses de renfort sont perforées de trous disposés en correspondance avec des trous ménagés dans le fond du profilé ;
- la dalle comporte en outre au moins un dispositif de maintien de câbles comprenant un collier qui traverse le fond de la dalle et qui est fixé à un sabot en appui sous le fond de la dalle de part et d'autre d'une des traverses de renfort, le sabot comprenant au moins une découpe engagée sur ladite traverse de renfort ;
- le sabot comprend une âme horizontale en appui sous le fond de la dalle et deux ailes verticales, le collier comportant deux extrémités fixées respectivement auxdites ailes verticales par un boulon traversant lesdites extrémités et lesdites ailes verticales ;
- le sabot comprend uniquement une aile verticale, le collier étant rigide et comportant deux extrémités fixées à ladite aile verticale par un boulon traversant ladite aile verticale et lesdites deux extrémités ;
- la ou chaque aile verticale du sabot comporte une fente parallèle au fond de la dalle, fente qui est traversée par le boulon ;
- les extrémités du collier délimitent des épaulements qui sont en appui sur le fond de la dalle, à l'opposé du sabot.

D'autres caractéristiques et avantages de l'invention apparaîtront au cours de la description suivante de plusieurs de ses modes de réalisation, donnés à titre d'exemples non limitatifs, en regard des dessins joints.

Sur les dessins :
- la figure 1 est une vue en perspective d'une dalle de support de câbles selon une première forme de réalisation de l'invention,
- la figure 2 est une vue de côté de la dalle de la figure 1,
- la figure 3 est une vue du détail III de la figure 2,
- la figure 4 est une vue de dessous de la dalle de la figure 1,
- la figure 5 est une vue en bout de la dalle de la figure 1,
- la figure 6 est une vue en perspective d'une dalle selon une deuxième forme de réalisation de l'invention ;
- la figure 7 est une vue éclatée montrant le dispositif de maintien de câbles de la dalle de la figure 6,
- et les figures 8 et 9 sont des vues similaires aux figures 6 et 7, pour une troisième forme de réalisation.

Sur les différentes figures, les mêmes références désignent des éléments identiques ou similaires.

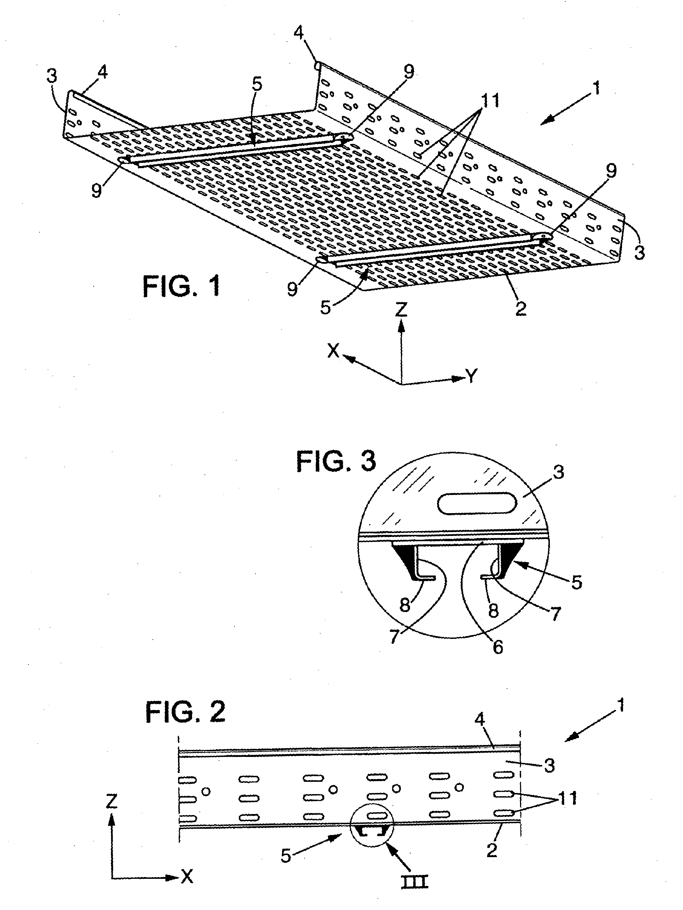

La figure 1 représente une dalle 1 de support de câble, comprenant un profilé en tôle mince qui s'étend en longueur selon une direction horizontale longitudinale X et qui présente une section en U, avec un fond 2 et deux parois latérales 3 formées d'une seule pièce avec le fond.

Les parois latérales 3 s'étendent vers le haut selon une direction verticale Z jusqu'à des bords supérieurs 4 qui peuvent avantageusement être roulés, notamment pour augmenter la rigidité de la dalle.

La dalle 1 définit ainsi un certain volume intérieur qui est adapté pour recevoir des câbles (non représentés) s'étendant dans la direction longitudinale X. Ces câbles peuvent avantageusement être enfermés dans le volume intérieur de la dalle par un couvercle métallique (non représenté) qui est rapporté sur le profilé en U. On obtient ainsi une excellente isolation entre l'intérieur et l'extérieur de la dalle vis-à-vis des ondes électromagnétiques.

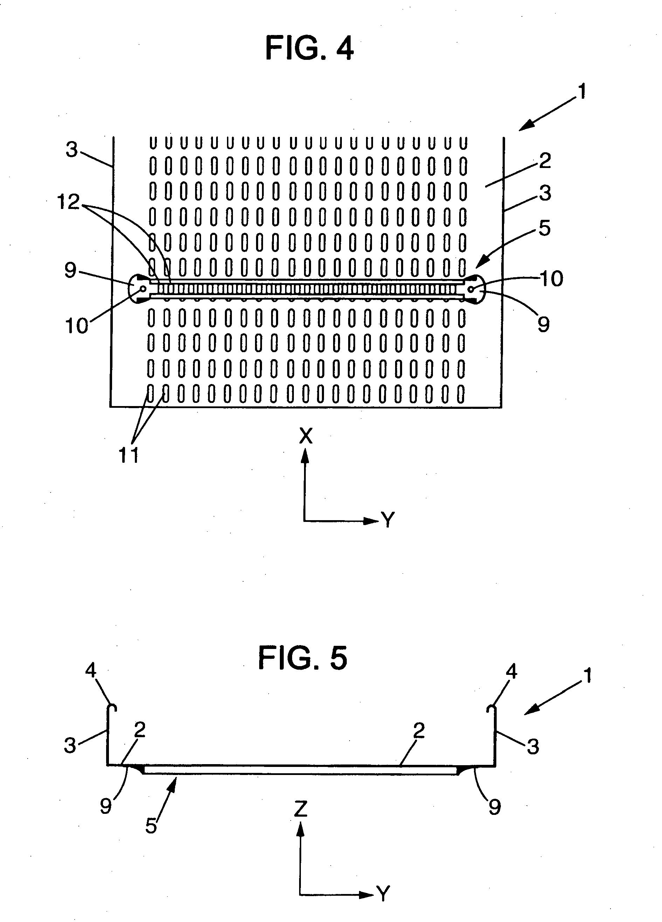

Comme on peut le voir sur les figures 1 à 5, la dalle selon l'invention comporte en outre des traverses de renfort 5 qui sont fixées rigidement sur le fond 2 et qui s'étendent selon une direction horizontale Y perpendiculaire à la direction longitudinale X. Ces traverses de renfort 5 peuvent être formées par exemple par des profilés de tôle à section sensiblement en U (voir figure 3), comprenant une base 6 disposée au contact de la face inférieure du fond 2 et deux ailes 7 s'étendant à l'opposé du fond 2, jusqu'à des bords inférieurs 8 repliés l'un vers l'autre. Chaque traverse de renfort 5 s'étend selon la direction Y entre deux extrémités en forme de pattes 9, qui sont fixées sous le fond 2, par exemple par rivetage, notamment grâce à des rivets auto - perçants 10 (voir figure 4), au voisinage des deux parois latérales 3.

La présence des traverses de renfort 5 permet d'éviter que les parois latérales 3 ne se défléchissent lorsque la dalle subit des efforts de flexion, ce qui permet de renforcer considérablement la dalle vis-à-vis desdits efforts de flexion. On peut ainsi utiliser la dalle 1, le cas échéant, avec de grandes portées entre points d'appui, y compris lorsque la dalle présente une largeur élevée.

On notera que la dalle peut être perforée de trous 11, par exemple des trous oblongs s'étendant longitudinalement dans la direction X, au niveau de son fond 2 et le cas échéant de ses parois latérales 3, par exemple pour permettre la fixation de câbles au moyen de colliers de serrage. Les traverses de renfort 5 peuvent être perforées de trous 12 disposés en correspondance avec les trous 11 ménagés dans le fond 2 du profilé.

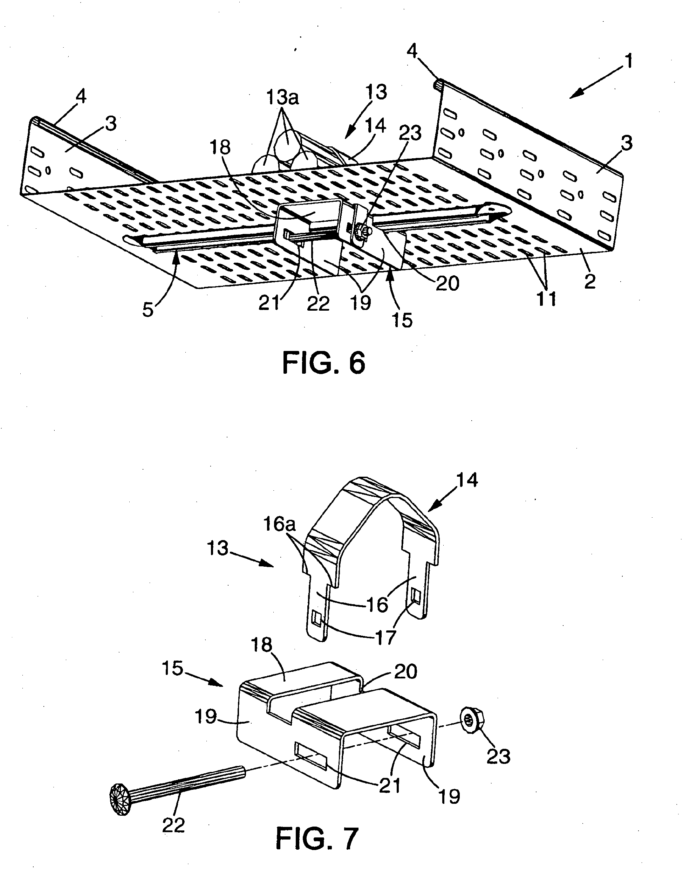

Les dalles représentées sur les figures 6 à 9 sont identiques ou similaires à celle décrite précédemment, mais comportent en outre des dispositifs de maintien 13 pour retenir des câbles 13a, notamment des câbles de puissance (ces dispositifs de maintien servent en particulier à éviter les phénomènes de "coups de fouets" rencontrés avec de tels câbles de puissance).

Le dispositif de maintien de câble comprend un collier 14 qui traverse les trous 11 du fond 2 de la dalle et qui est fixé à un sabot 15 en appui sous le fond 2 de la dalle de part et d'autre d'une des traverses de renfort 5. Le sabot 15 comprend au moins une découpe 20 engagée sur ladite traverse de renfort 5. Le collier 14 est de préférence métallique et rigide. Les extrémités 16 dudit collier délimitent des épaulements 16a qui sont en appui sur la face supérieure du fond 2 de la dalle.

Dans la forme de réalisation des figures 6 et 7, le sabot 15 comprend une âme horizontale 18 en appui sous le fond 2 de la dalle et deux ailes verticales 19, la découpe 20 étant formée dans l'âme 18 et les parois verticales 19. Les deux extrémités 16 du collier sont en appui latéral sur les ailes verticales 19 de part et d'autre du sabot, et sont fixées auxdites ailes verticales par un boulon comprenant une vis 22 un écrou 23. La vis 22 traverse des trous 17 auxdites extrémités 16 et des fentes horizontales 21 dans lesdites ailes verticales 19. Les fentes 21 permettent un montage aisé du dispositif de maintien 13, en permettant une adaptation de la position de la vis 22 compte tenu des tolérances de fabrication et des variations possibles dans la position relative des traverses de renfort 5 par rapport aux trous 11.

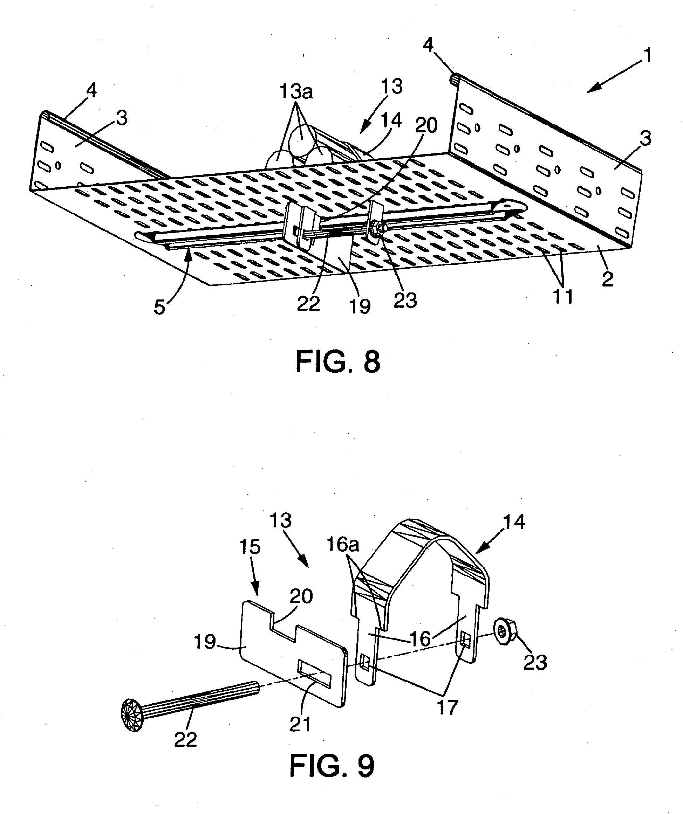

La forme de réalisation des figures 8 et 9 se différencie de celle des figures 6 et 7 par le fait que le sabot 15 comprend uniquement une aile verticale 19 disposée en appui latéral contre la face externe d'une des extrémités 16 du collier 14. La vis 22 traverse des trous 17 aux extrémités 16 du collier et une fente horizontale 21 dans l'aile verticale 19.

## Revendications

1. Dalle de support de câbles, comprenant un profilé en tôle qui s'étend en longueur selon une direction longitudinale (X) et qui présente au moins un fond (2) et deux parois latérales (3) formées d'une seule pièce avec le fond (2),
**caractérisée en ce qu'**elle comporte en outre des traverses de renfort (5) qui sont fixées rigidement contre la face inférieure du fond (2) et qui s'étendent perpendiculairement à la direction longitudinale (X), ces traverses de renfort (5) étant solidarisées avec le fond (2) au moins par des fixations (10) voisines des deux parois latérales (3).

2. Dalle selon la revendication 1, dans laquelle les traverses de renfort (5) sont des profilés à section sensiblement en U comprenant une base (6) au contact du fond (2) et deux ailes (7) s'étendant à l'opposé du fond (2).

3. Dalle selon la revendication 2, dans laquelle les ailes (7) de chaque traverse de renfort (5) présentent des bords inférieurs (8) repliés l'un vers l'autre.

4. Dalle selon l'une quelconque des revendications précédentes, dans laquelle les traverses de renfort (5) sont rivetées contre la face inférieure du fond (2) de la dalle (1).

5. Dalle selon l'une quelconque des revendications précédentes, dans laquelle les parois latérales (3) présentent un bord roulé supérieur (4).

6. Dalle selon l'une quelconque des revendications précédentes, dans laquelle les traverses de renfort (5) sont perforées de trous (12) disposés en correspondance avec des trous (11) ménagés dans le fond (2) de la dalle (1).

7. Dalle selon l'une quelconque des revendications précédentes, comportant en outre au moins une dispositif de maintien de câbles (13) comprenant un collier (14) qui traverse le fond (2) de la dalle et qui est fixé à un sabot (15) en appui sous le fond de la dalle de part et d'autre d'une des traverses de renfort (5), le sabot comprenant au moins une découpe engagée sur ladite traverse de renfort (5).

8. Dalle selon la revendication 7, dans laquelle le sabot (15) comprend une âme horizontale (18) en appui sous le fond (2) de la dalle et deux ailes verticales (19), le collier (14) comportant deux extrémités (16) fixées respectivement auxdites ailes verticales par un boulon (22, 23) traversant lesdites extrémités (16) et lesdites ailes verticales (19).

9. Dalle selon la revendication 7, dans laquelle le sabot (15) comprend uniquement une aile verticale (19), le collier (14) étant rigide et comportant deux extrémités (16) fixées à ladite aile verticale (19) par un boulon (22, 23) traversant ladite aile verticale et lesdites deux extrémités.

10. Dalle selon la revendication 8 ou la revendication 9, dans laquelle la ou chaque aile verticale (19) du sabot comporte une fente (21) parallèle au fond (2) de la dalle, fente qui est traversés par le boulon (22, 23).

11. Dalle selon l'une quelconque des revendications 8 à 10, dans laquelle les extrémités (16) du collier délimitent des épaulements (16a) qui sont en appui sur le fond (2) de la dalle, à l'opposé du sabot (15).

## Patentansprüche

1. Kabeltragplatte, umfassend ein Profil aus Blech, das sich in der Länge in einer Längsrichtung (X) erstreckt und mindestens einen Boden (2) und zwei Seitenwände (3) aufweist, die einstückig mit dem Boden (2) gebildet sind,
**dadurch gekennzeichnet, dass** sie ferner Verstärkungsquerträger (5) umfasst, die starr an der unteren Fläche des Bodens (2) befestigt sind und sich senkrecht zu der Längsrichtung (X) erstrecken, wobei diese Verstärkungsquerträger (5) mindestens durch den beiden Seitenwänden (3) benachbarte Befestigungsvorrichtungen (10) fest mit dem Boden (2) verbunden sind.

2. Platte nach Anspruch 1, wobei die Verstärkungsquerträger (5) Profile mit im Wesentlichen U-förmigem Querschnitt sind, die eine Basis (6), die mit dem Boden (2) in Kontakt steht, und zwei Flügel (7), die sich dem Boden (2) gegenüberliegend erstrecken, umfassen.

3. Platte nach Anspruch 2, wobei die Flügel (7) jedes Verstärkungsquerträgers (5) aufeinander zu gebogene untere Ränder (8) aufweisen.

4. Platte nach einem der vorhergehenden Ansprüche, wobei die Verstärkungsquerträger (5) an die untere Fläche des Bodens (2) der Platte (1) genietet sind.

5. Platte nach einem der vorhergehenden Ansprüche, wobei die Seitenwände (3) einen gerollten oberen Rand (4) aufweisen.

6. Platte nach einem der vorhergehenden Ansprüche, wobei die Verstärkungsquerträger (5) mit Löchern (12) perforiert sind, die entsprechend den im Boden (2) der Platte (1) ausgeführten Löchern (11) angeordnet sind.

7. Platte nach einem der vorhergehenden Ansprüche, die ferner mindestens eine Vorrichtung (13) zum Halten von Kabeln umfasst, die eine Schelle (14) umfasst, die durch den Boden (2) der Platte geht und an einem Schuh (15) befestigt ist, der unter dem Boden der Platte beiderseits eines der Verstärkungsquerträger (5) anliegt, wobei der Schuh mindestens einen Ausschnitt umfasst, der an dem Verstärkungsquerträger (5) in Eingriff steht.

8. Platte nach Anspruch 7, wobei der Schuh (15) einen horizontalen Kern (18) umfasst, der unter dem Boden (2) der Platte anliegt und zwei vertikale Flügel (19) umfasst, wobei die Schelle (14) zwei Enden (16) umfasst, die durch einen Bolzen (22, 23), der durch die Enden (16) und die vertikalen Flügel (19) geht, jeweils an den vertikalen Flügeln befestigt sind.

9. Platte nach Anspruch 7, wobei der Schuh (15) nur einen vertikalen Flügel (19) umfasst, wobei die Schelle (14) starr ist und zwei Enden (16) umfasst, die durch einen Bolzen (22, 23), der durch den vertikalen Flügel und die beiden Enden geht, an dem vertikalen Flügel (19) befestigt sind.

10. Platte nach Anspruch 8 oder 9, wobei der oder jeder vertikale Flügel (19) des Schuhs einen parallel zum Boden (2) der Platte verlaufenden Schlitz (21) umfasst, durch den der Bolzen (22, 23) geht.

11. Platte nach einem der Ansprüche 8 bis 10, wobei die Enden (16) der Schelle Schultern (16a) begrenzen, die dem Schuh (15) gegenüberliegend am Boden (2) der Platte anliegen.

## Claims

1. Cable tray, comprising a sheet metal profile which extends lengthwise in a longitudinal direction (X) and which has at least one bottom (2) and two sidewalls (3) formed in one piece with the bottom (2),
**characterized in that** it further comprises reinforcing crosspieces (5) which are rigidly attached to the underside of the bottom (2) and which extend perpendicular to the longitudinal direction (X), these reinforcing crosspieces (5) being secured to the bottom (2) at least by means of attachments (10) close to the two sidewalls (3).

2. Tray according to Claim 1, in which the reinforcing crosspieces (5) are profiles of substantially U-shaped cross section, comprising a base (6) in contact with the bottom (2) and two flanges (7) extending away from the bottom (2).

3. Tray according to Claim 2, in which the flanges (7) of each reinforcing crosspiece (5) have lower edges (8) which are bent towards one another.

4. Tray according to any one of the preceding claims, in which the reinforcing crosspieces (5) are riveted to the underside of the bottom (2) of the tray (1).

5. Tray according to any one of the preceding claims, in which the sidewalls (3) have a rolled upper edge (4).

6. Tray according to any one of the preceding claims, in which the reinforcing crosspieces (5) are perforated with holes (12) that are arranged in line with holes (11) created in the bottom (2) of the tray (1).

7. Tray according to any one of the preceding claims, further comprising at least one cable holding device (13) comprising a collar (14) which passes through the bottom (2) of the tray and which is attached to a shoe (15) which is pressed against the underside of the bottom of the tray on either side of one of the reinforcing crosspieces (5), the shoe comprising at least one cutout engaged on said reinforcing crosspiece (5).

8. Tray according to Claim 7, in which the shoe (15) comprises a horizontal web (18) which is pressed against the underside of the bottom (2) of the tray and two vertical flanges (19), the collar (14) comprising two ends (16) attached respectively to said vertical flanges by means of a bolt (22, 23) passing through said ends (16) and said vertical flanges (19).

9. Tray according to Claim 7, in which the shoe (15) comprises only one vertical flange (19), the collar (14) being rigid and comprising two ends (16) attached to said vertical flange (19) by means of a bolt (22, 23) passing through said vertical flange and said two ends.

10. Tray according to Claim 8 or 9, in which the or each vertical flange (19) of the shoe comprises a slot (21) parallel to the bottom (2) of the tray, wherein the bolt (22, 23) passes through this slot.

11. Tray according to any one of Claims 8 to 10, in which the ends (16) of the collar delimit shoulders (16a) which are pressed against the bottom (2) of the tray, opposite the shoe (15).
